# EUROPÄISCHE PATENTSCHRIFT

(11) **EP 4 311 654 B1**
(45) Veröffentlichungstag und Bekanntmachung des Hinweises auf die Patenterteilung: **25.02.2026**
(21) Anmeldenummer: 22186712.0
(22) Anmeldetag: 25.07.2022
(51) Int. Cl.: B29C 51/38

(54) **THERMOFORMMASCHINE**
THERMOFORMING MACHINE
MACHINE DE THERMOFORMAGE

(43) Veröffentlichungstag der Anmeldung: 31.01.2024
(73) Patentinhaber: Geiss AG, 96145 Sesslach (DE)
(72) Erfinder: GEISS, Manfred, 96145 Seßlach (DE)
(74) Vertreter: Isarpatent

(56) Entgegenhaltungen:
- EP-A1- 3 804 959
- EP-A1- 3 808 534
- EP-B1- 1 604 803
- DE-B4- 102009 045 543
- JP-A- 2010 284 862
- US-A1- 2009 104 300
- US-B2- 8 075 816

## Beschreibung

### GEBIET DER ERFINDUNG

Die Erfindung bezieht sich auf Thermoformmaschinen und hierbei insbesondere auf Antriebsanordnungen bei Thermoformmaschinen.

### TECHNISCHER HINTERGRUND

Thermoformmaschinen als solche sind bereits bekannt. Eine Thermoformmaschine ist eine Umformmaschine für ein Ausgangsmaterial, insbesondere eine Kunststofffolie oder Kunststoffplatte aus einem Thermoplasten.

Die Herstellung von Formteilen aus dem Ausgangsmaterial durch Thermoformen kann beispielsweise wie folgt erfolgen: Für die Formgebung wird ein Zuschnitt des Ausgangsmaterials mit Hilfe eines so genannten Spannrahmens eingespannt. Dann wird das Ausgangsmaterial erwärmt und auf diese Weise in einen thermoelastischen oder thermoplastischen Zustand gebracht. Eine Form fährt in diesen Materialzuschnitt hinein und dichtet beispielsweise gegen eine Spannplatte ab. Das Formen erfolgt insbesondere dadurch, dass auf einer Seite des Ausgangsmaterials Vakuum angelegt wird und der umgebende Luftdruck dann das Material auf die Form presst. Man nennt derartige Maschinen daher auch Vakuumformmaschinen.

Das Formen kann bei einigen Beispielen unterstützt werden durch mechanischen Druck von der Gegenseite, wenn zur Ausformung die Kraft des Luftdruckes nicht genügt.

Hauptelemente derartiger beispielhafter herkömmlicher Thermoformmaschinen sind somit ein Maschinentisch zum Tragen und Verfahren der Form, der bereits genannte Spannrahmen, und ein Oberstempel zur Unterstützung des Formens, wobei üblicherweise diese drei Elemente zum Betrieb einer Thermoformmaschine die höchsten Kräfte erfordern.

Bewegungen des Maschinentisches, des Spannrahmens und gegebenenfalls des Oberstempels wurden - und werden auch heutzutage häufig noch - mit Hilfe von Pneumatikzylindern ausgeführt. Da im Falle aller drei genannten Elemente die aufzubringenden Kräfte beispielhaft etwa in der Größenordnung von 10 bis 100 kN liegen können, hat sich ein pneumatischer Antrieb über viele Jahre bewährt.

Herkömmliche pneumatische Antriebe in Thermoformmaschinen erfordern jedoch eine Synchronisation der bewegenden Elemente, also verschiedener Pneumatikzylinder, um einen Gleichlauf derselben zu erreichen.

Neuerdings werden statt derartiger pneumatischer Antriebe in Thermoformmaschinen zum Antrieb Drehstromservomotoren und Getriebe zur Herabsetzung der relativ hohen Motordrehzahl und zur Erhöhung des Drehmomentes eingesetzt. Dieser Antrieb wirkt auf eine Kugelrollspindel oder eine Zahnstange. Da die Baugruppen wie Maschinentisch, Spannrahmen und ggf. Oberstempel vielfach eine im Wesentlichen rechteckige Grundform haben, ist bereits beschrieben worden, einen derartigen Antrieb im Bereich jeder der vier Ecken einzusetzen. Demzufolge kann eine Thermoformmaschine heutzutage beispielsweise vier Antriebe für den Spannrahmen und vier für den Maschinentisch, jeweils an den Ecken desselben, aufweisen. Im Falle des Oberstempels können meist zwei Antriebe, ggf. vier Antriebe, ausreichend sein.

In der EP 2 944 451 A1 wird beispielsweise eine Closed-Chamber-Thermoformmaschine beschrieben, bei der ein Tisch für ein Formwerkzeug sowie ein Spannrahmen jeweils mit Hilfe von Spindeltrieben verfahren werden. Der Antrieb erfolgt hierbei mittels Drehstrommotoren, deren Rotationsachse jeweils horizontal ausgerichtet ist. Die Drehstrommotoren sind jeweils mit einem Winkelgetriebe gekoppelt und treiben jeweils eine Kugelrollspindel an.

Mit einem derartigen Antriebskonzept für verfahrbare Maschinenkomponenten wie den Tisch oder den Spannrahmen lassen sich hohe Verfahrgeschwindigkeiten sowie eine hohe Präzision und Reproduzierbarkeit bei der Positionierung dieser Maschinenkomponenten erreichen. Zugleich ermöglicht es dieses Antriebskonzept, eine mechanische Synchronisierung, die beispielsweise Schmierung erfordert, mit Wartungsaufwand einhergeht und dem Verschleiß unterliegt, zu vermeiden. Eine Synchronisierung mehrerer Einzelantriebe kann hierbei auf elektronischem Wege durch die Steuerung realisiert werden.

Wenngleich derartige Antriebe auf Basis von Drehstrommotoren bei Thermoformmaschinen somit sehr vorteilhaft sind, hat sich herausgestellt, dass die eingesetzten Winkelgetriebe nicht unerhebliche Kosten verursachen. Drehstromservomotorantriebe mit Getriebe können erheblich kostspieliger als herkömmliche pneumatische Antriebe sein. Eine Verminderung der Anzahl an teuren Drehstromservomotoren mit Getrieben, etwa durch Nutzung von weniger Antrieben je zu bewegender Maschinenkomponente, kann wiederum eine mechanische Synchronisierung erforderlich machen.

Zudem sind derartige Winkelgetriebe, etwa Kegelradgetriebe, zwar langlebig und zuverlässig, dennoch besteht auch bei derartigen Winkelgetrieben zum Beispiel angesichts der aufeinander abwälzenden Zähne ein gewisser Bedarf an Pflege, Wartung und/oder Schmierung. Ferner geht insbesondere mit dem Betrieb von Zahnradgetrieben eine Geräuschentwicklung einher.

Die in der EP 2 944 451 A1 beschriebene Maschine ist bezüglich Bauraumausnutzung und kompakter Bauweise bereits sehr vorteilhaft. Dennoch ist für die Winkelgetriebe entsprechender Einbauraum bereitzustellen.

Ferner beschreibt die DE 10 2009 045 543 B4 eine Antriebseinheit für eine Form- und/oder Stanzanlage zur Erzeugung einer linearen vertikalen Relativbewegung zweier Werkzeugtische zueinander. Ein oder mehrere Antriebsmotoren sowie eine Kopplungseinheit zur Umsetzung einer Rotationsbewegung des/der Antriebsmotors/en in eine Linearbewegung werden beschrieben, wobei die Kopplungseinheit einen Spindelantrieb und ein Kniehebelsystem aufweist.

In der JP 2010 284 862 A wird ferner eine Pressformmaschine zum Formen einer Kunststofftafel beschrieben, welche vier elektromotorische Zylinder und eine Steuerung für diese aufweist.

Somit wäre es wünschenswert, die Kosten für den Antrieb von verfahrbaren Maschinenkomponenten einer Thermoformmaschine weiter zu reduzieren und vorzugsweise auch Verschleiß sowie Wartungs- und Pflegebedarf weiter zu vermindern. Zudem wäre es insbesondere wünschenswert, wenn der Platzbedarf für Antriebseinrichtungen und/oder deren Geräuschentwicklung noch weiter verringert werden könnten.

### ZUSAMMENFASSUNG DER ERFINDUNG

Vor diesem Hintergrund ist es Aufgabe der vorliegenden Erfindung, eine in Herstellung und/oder Instandhaltung kostengünstige sowie noch kompaktere und insbesondere zudem geräuschärmer arbeitende Thermoformmaschine zu schaffen.

Die Lösung dieser Aufgabe gelingt mit einer Thermoformmaschine mit den Merkmalen des Anspruchs 1 und/oder mit einer Thermoformmaschine mit den Merkmalen des Anspruchs 3 und/oder mit einer Thermoformmaschine mit den Merkmalen des Anspruchs 10 und/oder mit einer Thermoformmaschine mit den Merkmalen des Anspruchs 14.

Demgemäß wird erfindungsgemäß eine Thermoformmaschine vorgeschlagen, welche aufweist:
mindestens eine translatorisch verfahrbare Maschinenkomponente, mittels der beim Thermoformen eines Ausgangsmaterials für die Herstellung eines Formteils eine Kraft auf das Ausgangsmaterial aufbringbar ist, und
mindestens eine elektrische Maschine zum Antreiben der Maschinenkomponente für das translatorische Verfahren derselben. Hierbei ist vorgesehen, dass die elektrische Maschine als eine rotierende elektrische Maschine ausgebildet und zur Erzeugung einer Bewegung für das translatorische Verfahren der Maschinenkomponente ein drehbarer Läufer der elektrischen Maschine mit einem Element eines Spindeltriebs direkt gekoppelt ist.

Ferner ist hierbei die translatorisch verfahrbare Maschinenkomponente als ein verfahrbarer Maschinentisch für ein Formwerkzeug ausgebildet. Die rotierende elektrische Maschine ist hierbei an einer seitlichen, sich quer zur Verfahrrichtung des Maschinentisches erstreckenden Verlängerung eines tragenden Teils des Maschinentisches zwischen einer Einspannebene für das Ausgangsmaterial und einer durch eine Unterkante des tragenden Teils des Maschinentisches definierten Ebene angeordnet.

Somit kann das Formwerkzeug mit verminderten Kosten und Raumbedarf sowie zuverlässig, schnell, geräusch- und wartungsarm sowie genau verfahren werden. Ferner wird eine platzsparende Anordnung der elektrischen Maschine ermöglicht, zumal für den Maschinentisch und das tragende Teil desselben in Verfahrrichtung ohnehin ein gewisser Bauraum benötigt wird, um einen ausreichend tragfähigen Maschinentisch bereitzustellen, der das Gewicht der Form und die Formungskräfte aufnehmen kann. Vorzugsweise befindet sich hierbei die rotierende elektrische Maschine insbesondere in einer oberen für den Betrieb der Thermoformmaschine vorgesehenen Verfahrstellung des Maschinentisches zwischen der durch die Unterkante definierten Ebene und der Einspannebene.

Erfindungsgemäß wird weiterhin eine Thermoformmaschine vorgeschlagen, welche aufweist:
mindestens eine translatorisch verfahrbare Maschinenkomponente, mittels der beim Thermoformen eines Ausgangsmaterials für die Herstellung eines Formteils eine Kraft auf das Ausgangsmaterial aufbringbar ist, und
mindestens eine elektrische Maschine zum Antreiben der Maschinenkomponente für das translatorische Verfahren derselben. Hierbei ist vorgesehen, dass die elektrische Maschine als eine rotierende elektrische Maschine ausgebildet und zur Erzeugung einer Bewegung für das translatorische Verfahren der Maschinenkomponente ein drehbarer Läufer der elektrischen Maschine mit einem Element eines Spindeltriebs direkt gekoppelt ist.

Ferner ist hierbei die translatorisch verfahrbare Maschinenkomponente als ein verfahrbarer Maschinentisch für ein Formwerkzeug ausgebildet. Die rotierende elektrische Maschine ist hierbei mit einem Maschinengehäuse der Thermoformmaschine fest gekoppelt und hierbei zwischen einer Einspannebene für das Ausgangsmaterial und einer durch eine Unterkante eines tragenden Teils des Maschinentisches definierten Ebene angeordnet.

Somit kann das Formwerkzeug mit verminderten Kosten und Raumbedarf sowie zuverlässig, schnell, geräusch- und wartungsarm sowie genau verfahren werden. Eine derartige erfindungsgemäße Ausgestaltung kann beispielweise dazu beitragen, die bewegten Massen zu verringern und die Anzahl an Zuleitungen wie elektrischen Kabeln zu bewegten Bauteilen zu verringern. Hierbei kann sich die rotierende elektrische Maschine insbesondere in einer oberen für den Betrieb der Thermoformmaschine vorgesehenen Verfahrstellung des Maschinentisches zwischen der durch die Unterkante definierten Ebene und der Einspannebene befinden.

Darüber hinaus wird erfindungsgemäß eine Thermoformmaschine vorgeschlagen, welche aufweist:
mindestens eine translatorisch verfahrbare Maschinenkomponente, mittels der beim Thermoformen eines Ausgangsmaterials für die Herstellung eines Formteils eine Kraft auf das Ausgangsmaterial aufbringbar ist, und
mindestens eine elektrische Maschine zum Antreiben der Maschinenkomponente für das translatorische Verfahren derselben. Hierbei ist vorgesehen, dass die elektrische Maschine als ein Linearmotor ausgebildet ist und ein translatorisch bewegbarer Läufer des Linearmotors mit der Maschinenkomponente direkt gekoppelt ist.

Ferner ist hierbei die translatorisch verfahrbare Maschinenkomponente als ein verfahrbarer Maschinentisch für ein Formwerkzeug ausgebildet. Der Läufer des Linearmotors ist fest mit einem tragenden Teil des Maschinentisches verbunden und zwischen einer Einspannebene für das Ausgangsmaterial und einer durch eine Unterkante des tragenden Teils des Maschinentisches definierten Ebene angeordnet.

Somit kann das Formwerkzeug mit verminderten Kosten und Raumbedarf sowie zuverlässig, schnell, geräusch- und wartungsarm sowie genau verfahren werden. Diese erfindungsgemäße Ausgestaltung trägt wiederum zu einer platzsparenden Bauweise bei. Hierbei kann sich der Läufer bevorzugt insbesondere in einer oberen für den Betrieb der Thermoformmaschine vorgesehenen Verfahrstellung des Maschinentisches zwischen der durch die Unterkante definierten Ebene und der Einspannebene befinden.

Eine der Erfindung zu Grunde liegende Idee besteht darin, dass mit Hilfe der direkten mechanischen Kopplung des drehbaren Läufers mit einem Element des Spindeltriebs oder dem Einsatz eines Linearmotors und der direkten mechanischen Kopplung des translahierbaren Läufers desselben mit der Maschinenkomponente eine mechanische Drehzahlwandlung zwischen zwei rotatorischen Bewegungen, wie zum Beispiel mittels eines Kegelradgetriebes, vermieden werden kann.

Auf diese Weise wird weniger Platz benötigt und kompaktere Einbauverhältnisse für den Antrieb werden erzielt. Ferner werden durch Einsparung des mechanischen Getriebes, etwa des Winkelgetriebes, Kosten gespart. Weiterhin entfällt die Lärmentwicklung etwa des Kegelradgetriebes, die auf die mahlende Bewegung der aufeinander kämmenden Zähne dieses Getriebes zurückgeht.

Zudem kann durch die Vermeidung des Winkelgetriebes der Wartungs- und Pflegeaufwand für den Antrieb verringert werden, wobei nur ein erheblich verringerter Instandhaltungsaufwand und erheblich verringerter Verschleiß verbleiben.

Vorteilhaft ermöglicht die Erfindung somit eine Einsparung von kostspieligen mechanischen Getrieben und trägt dadurch, dass der Aufwand zur mechanischen Wandlung der Antriebsbewegung reduziert oder vermieden wird, zu einer Vereinfachung der Bauweise und zu Bauraumeinsparungen bei, wodurch die Thermoformmaschine kostengünstiger und kompakter gebaut werden kann. Die Verminderung der Anzahl beweglicher mechanischer Bauteile kann ferner helfen, den Wartungs- und Schmierungsaufwand sowie Verschleiß zu verringern und eine hohe Zuverlässigkeit zu erzielen. Angesichts der erheblichen Anzahl von beispielsweise zehn Einzelantrieben in einer Thermoformmaschine können sich die genannten Einsparungen und Verbesserungen in Bezug auf die Gesamtmaschine noch vorteilhafter auswirken.

Der Linearmotor ermöglicht zudem die direkte Bereitstellung einer translatorischen Bewegung ohne mechanische Elemente zur Umsetzung einer Drehbewegung in die Translationsbewegung.

Vorteilhafte Ausgestaltungen und Weiterbildungen der Erfindung ergeben sich aus den Unteransprüchen sowie aus der Beschreibung unter Bezugnahme auf die Figuren der Zeichnung.

Mit einer Ausbildung der verfahrbaren Maschinenkomponente als ein Spannrahmen zum Festspannen des Ausgangsmaterials für das Umformen desselben gelingt ein zuverlässiges, schnelles und präzises Verfahren des Spannrahmens mit verringertem Aufwand, geringeren Kosten und vermindertem Bauraumbedarf und geringer Geräuschentwicklung.

Wird die verfahrbare Maschinenkomponente als eine Formhilfe, insbesondere als ein Oberstempel, ausgebildet, kann die Formhilfe genau, schnell, zuverlässig und geräuscharm bewegt und wiederum insbesondere Kosten und Bauraumbedarf hierfür vermindert werden. Während die Formhilfe, etwa der Oberstempel, bei einigen Formungsvorgängen zweckmäßig sein kann, kann sie bei der Herstellung anderer Formteile zum Beispiel außer Betrieb genommen oder die Thermoformmaschine bei anderen Ausgestaltungen ohne die Formhilfe, etwa den Oberstempel, ausgebildet werden.

In einer bevorzugten Ausgestaltung ist die rotierende elektrische Maschine als ein Drehstrom-Servomotor, insbesondere ein Torquemotor, ausgebildet. Ein derartiger Elektromotor ist dazu ausgebildet und geeignet, ein vergleichsweise sehr hohes Drehmoment ohne Einsatz eines Getriebes bereitzustellen.

Bei einer Ausgestaltung ist die rotierende elektrische Maschine an der translatorisch verfahrbaren Maschinenkomponente derart angeordnet, dass die elektrische Maschine beim Verfahren der Maschinenkomponente mit dieser in Verfahrrichtung mitbewegt wird. Eine derartige mitfahrende elektrische Maschine kann beispielsweise nützlich sein, wenn nach dem Einbauverhältnissen in der Thermoformmaschine geeigneter Bauraum für eine mitbewegte elektrische Maschine vorhanden ist oder leicht bereitgestellt werden kann.

In einer anderen Ausgestaltung kann ein Ständer der rotierenden elektrischen Maschine fest mit einem Maschinengehäuse gekoppelt sein.

Gemäß einer Weiterbildung ist mittels der rotierenden elektrischen Maschine als angetriebenes Element eine Spindel oder eine Mutter des Spindeltriebes zur Erzeugung der Bewegung für das translatorische Verfahren der Maschinenkomponente direkt, insbesondere ohne Zwischenschaltung eines Getriebes zwischen dem Läufer der rotierenden elektrischen Maschine und dem angetriebenen Element, antreibbar. Insbesondere entspricht hierbei eine Drehzahl des Läufers der rotierenden elektrischen Maschine im Betrieb derselben einer Drehzahl des angetriebenen Elements des Spindeltriebes. Mittels eines derartigen Spindeltriebs gelingt ein zuverlässiges Bewegen der Maschinenkomponente, wobei ein zusätzliches Getriebe vermieden wird, und wobei zugleich eine mechanische Verbindung in vertikaler Richtung weiterhin, durch den Eingriff von Mutter und Spindel, vorhanden ist.

In einer weiteren Ausgestaltung weist die rotierende elektrische Maschine eine Hohlwelle auf, wobei das angetriebene Element mit der Hohlwelle drehfest verbunden ist. Insbesondere kann sich hierbei die Spindel des Spindeltriebes axial durch einen Innenbereich der Hohlwelle hindurch erstrecken. Zum Beispiel kann die Mutter in oder an der Hohlwelle angeordnet sein und/oder oder es kann ein Abschnitt der Spindel in dem Inneren der Hohlwelle angeordnet sein. Dies ermöglicht einen direkten und platzsparenden Antrieb des angetriebenen Elements.

Insbesondere sind die Mutter, die Spindel und die Hohlwelle konzentrisch zueinander angeordnet.

Gemäß einer Weiterbildung kann die rotierende elektrische Maschine als ein Drehstromservomotor ausgebildet sein, der direkt eine in sich integrierte Mutter des Spindeltriebs enthält und somit die Mutter getriebelos antreibt. Ein derartiger Drehstromservomotor kann dazu beitragen, die Montage der Thermoformmaschine zu vereinfachen und ist platzsparend.

In einer Ausgestaltung ist die translatorisch verfahrbare Maschinenkomponente im Betrieb der Thermoformmaschine entlang einer im Wesentlichen vertikalen Richtung verfahrbar. Somit kann der Antrieb von beim Thermoformen in vertikaler Richtung zu bewegenden Maschinenkomponenten verbessert werden. Insbesondere ist die translatorisch verfahrbare Maschinenkomponente geradlinig verfahrbar. Eine derartige Verfahrbarkeit ist vorteilhaft vergleichsweise einfach realisierbar.

Gemäß einer Weiterbildung ist eine Drehachse der rotierenden elektrischen Maschine im Wesentlichen vertikal angeordnet. In einer anderen Weiterbildung weist der Linearmotor eine im Wesentlichen vertikale Bewegungsrichtung auf. Somit kann eine weitere Vereinfachung der Bauweise der Thermoformmaschine erreicht werden.

Gemäß einer Weiterbildung ist vorgesehen, dass die Thermoformmaschine als eine Closed-Chamber-Thermoformmaschine ausgebildet ist und/oder dass die Thermoformmaschine als eine Einstation-Thermoformmaschine ausgebildet ist. Es wird somit möglich, ein verbessertes Antriebskonzept für Thermoformmaschinen bereitzustellen, die auf kompakte Weise und mit geringem Bedarf an Stellfläche vielfältige Formungsvorgänge ermöglichen.

### INHALTSANGABE DER ZEICHNUNG

Nachfolgend wird die Erfindung anhand der in den schematischen Figuren angegebenen Ausführungsbeispiele näher erläutert. Es zeigen
- Fig. 1: eine Thermoformmaschine in Vorderansicht, mit schematisch skizzierten Maschinenkomponenten und Antriebsanordnungen gemäß Ausführungsbeispielen der Erfindung;
- Fig. 2: die Thermoformmaschine der Fig. 1 in Draufsicht, wobei ein Oberstempel und Antriebsanordnungen für diesen nicht gezeigt sind;
- Fig. 3: eine schematische Vorderansicht eines Teils der Thermoformmaschine der Fig. 1 mit einem zusätzlich dargestellten Oberstempel derselben und schematisch skizzierten Antriebseinrichtungen für den Oberstempel;
- Fig. 4: eine Antriebsanordnung zum Antrieb eines Maschinentisches der Thermoformmaschine der Fig. 1, in einer Schnittansicht A - A, siehe Fig. 2, gemäß einem ersten Ausführungsbeispiel;
- Fig. 5: eine Antriebsanordnung zum Antrieb eines Spannrahmens der Thermoformmaschine der Fig. 1, in einem Schnitt C - C, siehe Fig. 2, gemäß einem zweiten Ausführungsbeispiel;
- Fig. 6: eine Antriebsanordnung zum Antrieb des Oberstempels der Thermoformmaschine der Fig. 1 in einer Schnittansicht B - B, siehe Fig. 2, gemäß einem dritten Ausführungsbeispiel;
- Fig. 7: eine Antriebsanordnung zum Antrieb des Maschinentisches der Thermoformmaschine der Fig. 1 gemäß einem vierten Ausführungsbeispiel, in dem Schnitt A - A wie in Fig. 2 skizziert;
- Fig. 8: eine Antriebsanordnung zum Antrieb des Spannrahmens der Thermoformmaschine der Fig. 1 gemäß einem fünften Ausführungsbeispiel, in einem Schnitt C - C wie in Fig. 2 skizziert;
- Fig. 9: eine Antriebsanordnung zum Antrieb des Maschinentisches der Thermoformmaschine der Fig. 1 gemäß einem sechsten Ausführungsbeispiel, in dem Schnitt A - A wie in Fig. 2 skizziert;
- Fig. 10: eine Antriebsanordnung zum Antrieb des Oberstempels der Thermoformmaschine der Fig. 1 in dem Schnitt B - B wie in Fig. 2 skizziert, gemäß einem siebten Ausführungsbeispiel; und
- Fig. 11: eine Antriebsanordnung zum Antrieb des Spannrahmens der Thermoformmaschine der Fig. 1 gemäß einem achten Ausführungsbeispiel, in einem Schnitt C - C wie in Fig. 2 angedeutet.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.

In den Figuren der Zeichnung sind gleiche, funktionsgleiche und gleich wirkende Elemente, Merkmale und Komponenten - soweits nichts anderes ausgeführt ist - jeweils mit denselben Bezugszeichen versehen. Die Elemente der Zeichnungen sind nicht notwendigerweise maßstabsgetreu zueinander dargestellt.

### BESCHREIBUNG VON AUSFÜHRUNGSBEISPIELEN

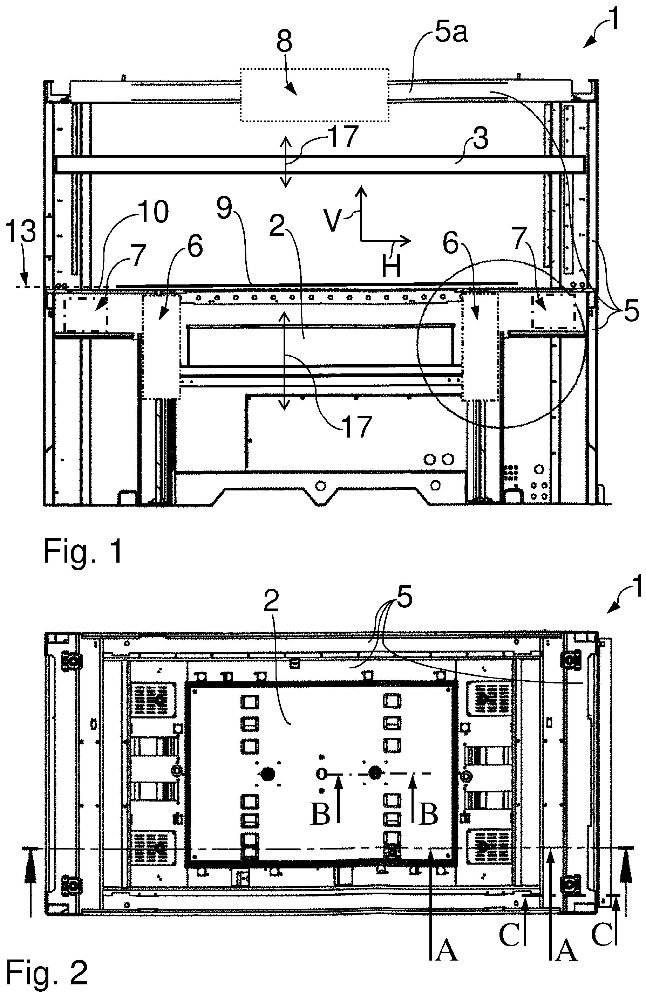

In Fig. 1-3 ist eine Einstation-Thermoformmaschine 1 schematisch mit mehreren translatorisch verfahrbaren Maschinenkomponenten 2, 3 und 4, und Antriebsanordnungen 6, 7 bzw. 8 für diese skizziert. Die Thermoformmaschine 1 ist für den Betrieb auf einem sich im Wesentlichen in einer horizontalen Richtung H erstreckenden Boden aufgestellt, die Maschinenkomponenten 2, 3, 4 sind im Wesentlichen parallel zu einer vertikalen Richtung V translatorisch verfahrbar. Translatorische Vertikalbewegungen 17 der Komponenten 2 und 3 sind in Fig. 1 beispielhaft angedeutet.

Fig. 1 zeigt ferner ein Maschinengehäuse 5 mit einem unteren kastenartig geschlossenen Teil und einem oberen rahmenartigen Bereich, und mit einer an einer Oberseite des kastenartig geschlossenen Teils des Maschinengehäuses 5 angeordneten, horizontalen Maschinenplatte 10. Durch die Maschinenplatte 10 oder eine gegen diese dichtende Fensterplatte, in Fig. 1 nicht gezeigt, wird eine im Wesentlichen horizontale Einspannebene 13 für ein Ausgangsmaterial 9 definiert. Das Ausgangsmaterial 9 wird insbesondere als eine Kunststofffolie oder -platte aus einem thermoplastischen Kunststoff bereitgestellt.

Die Thermoformmaschine 1 ist als eine Closed-Chamber-Thermoformmaschine ausgebildet, wobei der in Fig. 1 untere, kastenartige Teil des Maschinengehäuses 5 im Betrieb geschlossen und abgedichtet ist. Auf diese Weise kann der Luftdruck im geschlossenen Teil des Maschinengehäuses 5 unterhalb der Maschinenplatte 10 desselben kontrolliert und der geschlossene Teil insbesondere unter Überdruck gesetzt werden, um ein Durchhängen des Ausgangsmaterials 9 nach dessen Erwärmen zu vermeiden.

Eine erste Maschinenkomponente ist als ein verfahrbarer Maschinentisch 2 ausgebildet. Der Maschinentisch 2 trägt ein in Fig. 1 nicht gezeigtes Formwerkzeug. Mittels des Maschinentisches 2 wird eine Vertikalbewegung des Werkzeugs realisiert. Der Maschinentisch 2 ist unterhalb der Einspannebene 13 vertikal verfahrbar.

Das Formwerkzeug wird während des Thermoformvorgangs von unten in die erwärmte Kunststofffolie oder Kunststoffplatte 9 hineinbewegt. Dazu erfolgt diese Bewegung mit Hilfe der Antriebsanordnungen 6 für den Tisch 2 mit einer Kraft, die ausreicht, um das Gewicht des Formwerkzeugs anzuheben und das Formwerkzeug in die häufig zähe, erwärmte Kunststofffolie oder -platte 9 hineinzudrücken. Weiterhin wird das angehobene Formwerkzeug gegen das weiter unten beschriebene Spannsystem angedrückt, um dort abzudichten. Die eingesetzten Kräfte reichen beispielsweise von etwa 10kN bis etwa 100kN.

Eine zweite Maschinenkomponente der Thermoformmaschine 1 ist als ein Spannrahmen 3 ausgebildet. Der Spannrahmen 3 ist oberhalb der Einspannebene 13 parallel zur vertikalen Richtung V verfahrbar. Die Antriebsanordnungen 7 für den Spannrahmen 3 sind eingerichtet, das Gewicht des Spannrahmens auf- und abzubewegen und die Kunststofffolie oder -platte 9 gegen die Abdichtung an der Maschinenplatte 10 zu drücken. Die eingesetzten Kräfte reichen beispielsweise von etwa 10kN bis etwa 100kN.

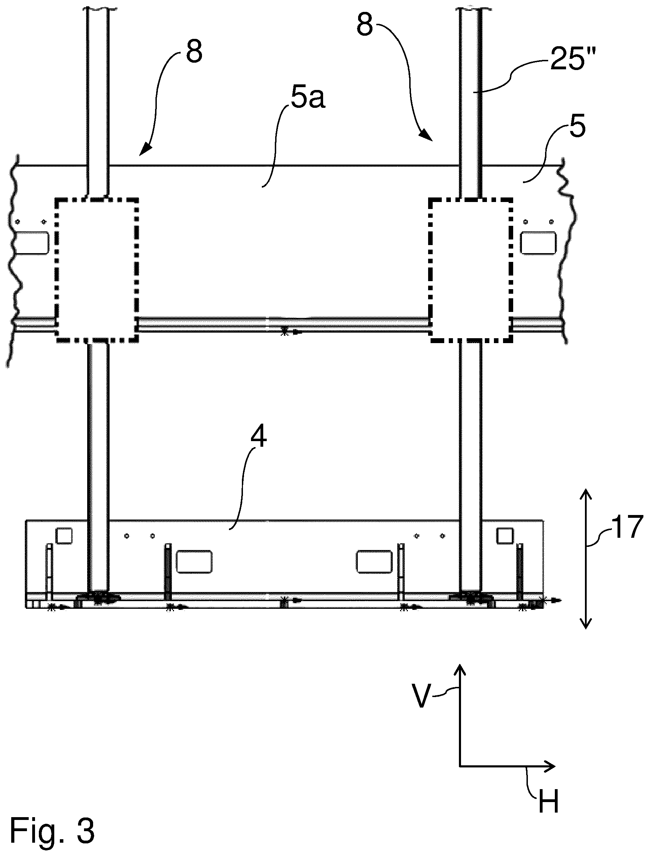

Eine dritte Maschinenkomponente der Thermoformmaschine 1 ist als eine Formhilfe in Form eines Oberstempels 4 ausgebildet, siehe auch Fig. 3. Der Oberstempel 4 unterstützt die Formung durch mechanischen Krafteinsatz mit einem entsprechenden Druck- oder Prägewerkzeug. Die eingesetzten Kräfte sind ähnlich denen für Maschinentisch 2 und Spannrahmen 3.

Somit sind bei der Thermoformmaschine 1 für deren Betrieb insbesondere folgende translatorischen Komponentenbewegungen vorgesehen:
- eine Bewegung 17 des Spannrahmens 3 zum Spannen des Materials 9 und ferner zum späteren Freigeben des geformten Teiles;
- eine Bewegung 17 des Maschinentisches 2 mit der von diesem getragenen Form in den Materialzuschnitt 9 hinein und zur Entformung wieder heraus;
- eine Bewegung 17 einer Formhilfe, insbesondere des Oberstempels 4, zur Unterstützung der Formung, zusätzlich zu den aufgrund des Luftdrucks wirkenden Kräften.

Vorgesehen sind somit in Fig. 1 beispielhaft vier Antriebsanordnungen 6 für den Maschinentisch 2 im Bereich der vier Ecken des im Wesentlichen rechteckigen Maschinentisches 2, vier Antriebsanordnungen 7 für den Spannrahmen 3 im Bereich der vier Ecken des im Wesentlichen rechteckigen Spannrahmens 3, sowie zwei Antriebsanordnungen 8 für den Oberstempel 4, siehe auch Fig. 3. In Fig. 1 sind die Antriebsanordnungen 7 strichpunktiert, die Antriebsanordnungen 6 doppelt-strichpunktiert schematisch angedeutet. Die Position der Antriebsanordnungen 8 insgesamt zeigt Fig. 1 schematisch in punktierter Linie, Fig. 3 zeigt die Positionen der einzelnen Antriebsanordnungen 8 schematisch in doppelt-strichpunktierter Linie. Insgesamt sind für die drei Elemente 2, 3, 4 somit beispielhaft zehn Antriebe vorgesehen. Die Schließkräfte von 10kN bis 100kN verteilen sich hierbei jeweils auf die (zum Beispiel zwei oder vier) Antriebe jeweils des Elements, also des Tisches 2, des Spannrahmen 3 oder des Oberstempels 4.

Nachfolgend werden Ausführungsbeispiele der Erfindung beschrieben, die ein getriebeloses Antriebskonzept für die vorstehend beschriebenen Einzelantriebe der Thermoformmaschine 1 implementieren. Hierbei kann bevorzugt zum Antrieb jeweils einer der Komponenten 2, 3 oder 4 eine Mehrzahl gleich ausgebildeter Antriebsanordnungen zum Einsatz kommen, wobei sich der Typ der Antriebsanordnungen aber zum Beispiel von Maschinenkomponente zu Maschinenkomponente gegebenenfalls unterscheiden kann. Ferner sind in Varianten der Ausführungsbeispiele andere Anzahlen an Antriebsanordnungen als die oben beispielhaft angegebenen je Komponente 2, 3 oder 4 vorstellbar. Beispielsweise sind in einer Variante für den Oberstempel 4 vier Antriebsanordnungen 8 denkbar.

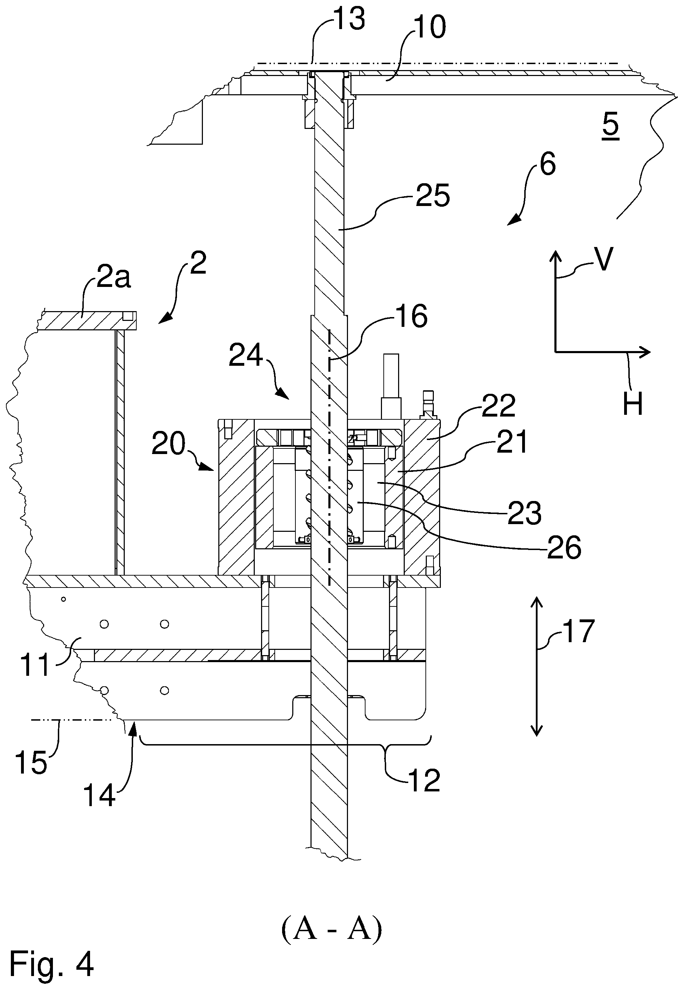

Fig. 4 zeigt eine Antriebsanordnung 6 für den Maschinentisch 2 im Schnitt A-A. Nur ein Teil des Maschinentisches 2 ist in Fig. 4 dargestellt. Ein tragender Teil 11 des Maschinentisches 2 in Form einer tragenden Unterkonstruktion weist seitlich eine Verlängerung 12 auf, die seitlich über eine das Werkzeug tragende Tischplatte 2a des Tisches 2 hinausragt und sich quer zur Verfahrrichtung 17 und damit quer zur Vertikalen V und im Wesentlichen in horizontaler Richtung H erstreckt.

Eine rotierende elektrische Maschine 20, die als ein Drehstrom-Servomotor und hierbei als ein Torquemotor ausgebildet ist, ist oberseitig an der Verlängerung 12 befestigt. Auf diese Weise ist der Torquemotor 20 zwischen der Einspannebene 13 für das Ausgangsmaterial 9 und einer durch eine Unterkante 14 des tragenden Teils 11 definierten, im Wesentlichen horizontalen Ebene 15 platzsparend angeordnet.

Bei dem Ausführungsbeispiel der Fig. 4 wird der Torquemotor 20 beim vertikalen translatorischen Verfahren des Maschinentisches 2 mit diesem in Verfahrrichtung 17 mitbewegt.

Der Torquemotor 20 weist einen Ständer 22 sowie einen innerhalb des Ständers 22 drehbar angeordneten Läufer 21 auf. Der Stator 22 ist mit dem tragenden Teil 11 im Bereich der Verlängerung 12 fest gekoppelt. Eine Drehachse 16 des Läufers 21 ist im Wesentlichen parallel zur vertikalen Richtung V. Der Läufer 21 ist mit einer Hohlwelle 23 ausgebildet. In der Hohlwelle 23 des Torquemotors 20 ist eine Mutter 26, insbesondere eine Kugelumlaufmutter, aufgenommen und drehfest mit der Hohlwelle 23 verbunden. Die Mutter 26 steht mit einer sowohl axial als auch in Umfangsrichtung feststehenden Spindel 25, insbesondere einer Kugelrollspindel, in Eingriff. Der Läufer 21, die Hohlwelle 23, die Mutter 26 und die Spindel 25 sind koaxial zueinander und zur Drehachse 16 angeordnet, die Spindel 25 erstreckt sich axial durch die Mutter 26 und ein Inneres der Hohlwelle 23.

Mit der Mutter 26 und der Spindel 25 ist ein Spindeltrieb 24 gebildet, wobei die Mutter 26 mittels des Torquemotors 20 direkt antreibbar ist, um den Maschinentisch 2 translatorisch zu verfahren. Zwischen die Mutter 26 und den Läufer 21 ist somit kein Getriebe zwischengeschaltet, der Antrieb in diesem Sinne getriebelos. Die Drehzahl des drehenden Läufers 21 entspricht der Drehzahl der Mutter 26.

Um eine Drehgeschwindigkeit des Torquemotors 20 und eine Geschwindigkeit des translatorischen Verfahrens 17 des Tisches 2 in ein geeignetes Verhältnis zu setzen und somit eine Übersetzung zu realisieren sowie die gewünschten Kräfte bereitzustellen, wird eine Steigung der Spindel 25 und eine Leistung des Torquemotors 20 passend gewählt. Selbst im Falle, dass eine Leistungssteigerung gegenüber herkömmlich verbauten Drehstrommotoren vorgenommen wird, ist das in Fig. 4 dargestellte Ausführungsbeispiel vorteilhaft, da zwischen der Mutter 26 und der Hohlwelle 23 kein teures Getriebe nötig ist.

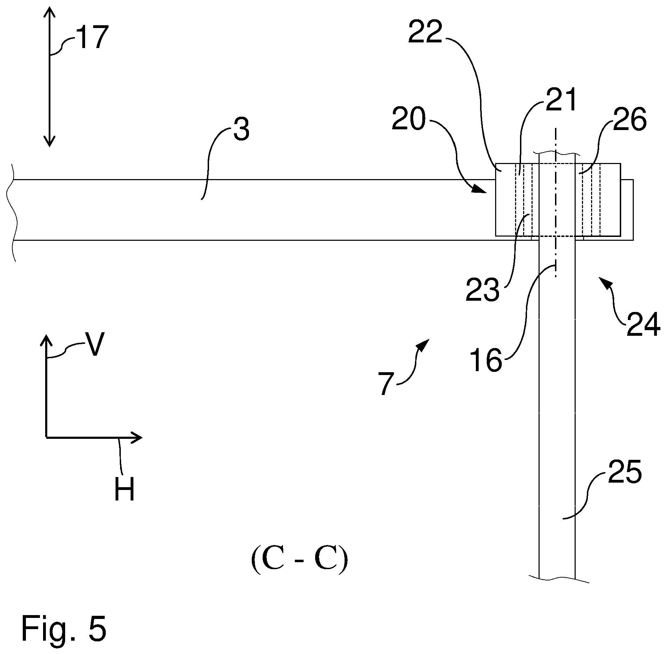

Eine Antriebsanordnung 7 für den Spannrahmen 3 gemäß einem Ausführungsbeispiel zeigt Fig. 5, wobei die Antriebsanordnung 7 analog jener der Fig. 4 aufgebaut ist. In Fig. 5 ist ebenfalls ein Spindeltrieb 24 mit einer axial und in Umfangsrichtung feststehenden Spindel 25 vorgesehen, wobei die Spindel 25 von der Maschinenplatte 10 im Wesentlichen vertikal nach oben absteht. An jeder Ecke des Spannrahmens 3 ist somit eine elektrische Maschine 20 vorgesehen, deren Ständer 22 mit dem Spannrahmen 3 fest gekoppelt ist. Die Hohlwelle 23 des Läufers 21 nimmt die Mutter 26 drehfest in sich auf. Mittels der Rotation des Läufers 21 jedes der Torquemotoren 20 um dessen im Wesentlichen vertikale Drehachse 16 kann der Spannrahmen 3 in im Wesentlichen vertikaler Richtung V verfahren werden, wie durch Bezugszeichen 17 angedeutet.

Bei den Antriebsanordnungen 6 und 7 der Fig. 4, 5 ist somit zur Herbeiführung der Bewegungen des Maschinentisches 2 bzw. des Spannrahmens 3 der Thermoformmaschine 1 somit die elektrische Maschine 20 derart eingebaut, dass sie mit der bewegten Komponente 2 oder 3 mitbewegt wird. Die angetriebene Mutter 26 läuft hierbei auf einer statisch angeordneten, fest eingespannten Spindel 25 auf und ab.

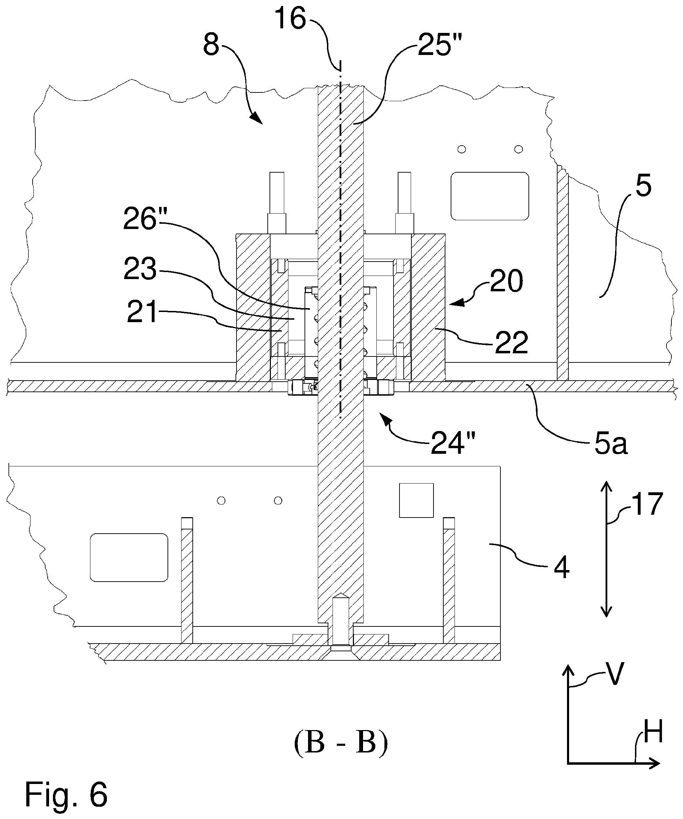

Fig. 6 zeigt eine Antriebsanordnung 8 für den Oberstempel 4 gemäß einem weiteren Ausführungsbeispiel in einer Schnittebene B-B. Hierbei ist ein Torquemotor 20 mit einem Ständer 22 und einem Läufer 21 mit Hohlwelle 23 vorgesehen, wobei der Ständer 22 fest mit dem Maschinengehäuse 5, und hierbei bei dem gezeigten Ausführungsbeispiel mit einem oberhalb eines Arbeitsbereichs der Thermoformmaschine 1 quer verlaufenden Teil 5a des Maschinengehäuses 5, gekoppelt ist. In der Hohlwelle 23 ist eine Mutter 26", insbesondere eine Kugelumlaufmutter, angeordnet, mit der Hohlwelle 23 drehfest verbunden und somit mittels des Läufers 21 direkt antreibbar. Koaxial zur Mutter 26" und zum Läufer 21 sowie zur Hohlwelle 23 und zur Drehachse 16 erstreckt sich eine Spindel 25", insbesondere eine Kugelrollspindel, durch die Mutter 26" und die Hohlwelle 23 axial hindurch. Mit der Mutter 26" und der mit dieser in Eingriff stehenden Spindel 25" ist ein Spindeltrieb 24" für den Antrieb des Oberstempels 4 gebildet. Die Spindel 25" ist in Umfangsrichtung fixiert, wird also beim Verfahren des Oberstempels 4 nicht in Drehung versetzt, ist jedoch entlang der Achse 16 parallel zur vertikalen Richtung V verschiebbar. Mittels einer Rotation der Mutter 26" wird die axiale Verschiebebewegung der Spindel 25" und somit die Translationsbewegung 17 des mit der Spindel 25" verbundenen Oberstempels 4 bewirkt. Auch im Falle der Fig. 6 können die Steigung der Spindel 25" und die Motorleistung des Torquemotors 20 geeignet angepasst werden.

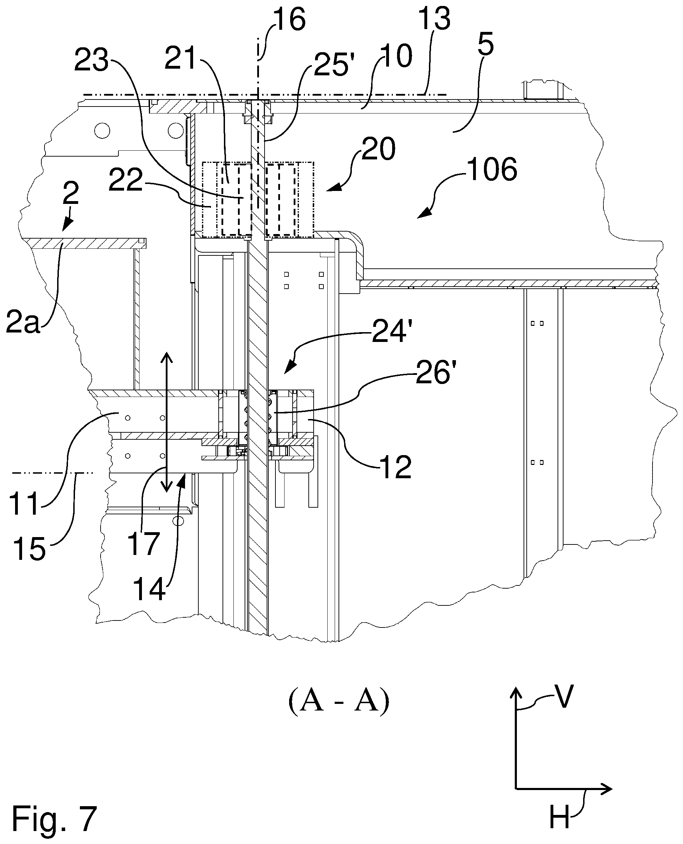

Eine Antriebsanordnung 106 für den Maschinentisch 2 gemäß einem weiteren Ausführungsbeispiel zeigt Fig. 7. Die Anordnung 106 kann in der Maschine 1 der Fig. 1, 2 anstelle der Anordnung 6 eingesetzt werden, um den Tisch 2 translatorisch in vertikaler Richtung V zu verfahren.

Die Antriebsanordnung 106 weist eine als Torquemotor ausgebildete rotierende elektrische Maschine 20 auf, deren Ständer 22 fest mit dem Maschinengehäuse 5 gekoppelt ist. Der Torquemotor 20 ist hierbei unterhalb der Maschinenplatte 10 angeordnet und befindet sich in allen im Betrieb vorgesehenen Stellungen des Maschinentisches 2 und somit auch in dessen oberster Position zwischen der Einspannebene 13 und der durch die Unterkante 14 des tragendes Teils 11 definierten Ebene 15.

Ein drehbarer Läufer 21 des Torquemotors 20 weist eine Hohlwelle 23 auf, durch die sich in Fig. 7 axial und konzentrisch zu dem Läufer 21 mit der Hohlwelle 23 und zu einer im Wesentlichen vertikalen Drehachse 16 des Läufers 21 eine Spindel 25' erstreckt. Die Spindel 25' kann an deren oberen Ende im Maschinengehäuse 5 gelagert sein, wie in Fig. 7 zeichnerisch skizziert, oder das obere Lager kann Teil der elektrischen Maschine 20 sein. Die Spindel 25' ist somit um die Achse 16 drehbar und zugleich in axialer Richtung 16 unverschiebbar angeordnet, wobei die Spindel 25' mit der Hohlwelle 23 drehfest verbunden und durch die elektrische Maschine 20 direkt antreibbar ist.

Die Spindel 25', beispielsweise eine Kugelrollspindel, bildet zusammen mit einer Mutter 26', die insbesondere als eine Kugelumlaufmutter ausgebildet ist, einen Spindeltrieb 24', mittels desselben der Tisch 2 zum Verfahren in Verfahrrichtung 17 antreibbar ist. Die Mutter 26' ist mit der Verlängerung 12 des tragenden Teils 11 drehfest sowie axial feststehend verbunden und läuft im Betrieb des Motors 20 auf der drehenden Spindel 25' auf und ab.

Somit ist in Fig. 7 der drehbare Läufer 21 direkt und ohne Zwischenschaltung eines Getriebes mit der Spindel 25' als Element des Spindeltriebs 24' gekoppelt, die Drehzahl der Spindel 25' entspricht der Drehzahl des Läufers 21.

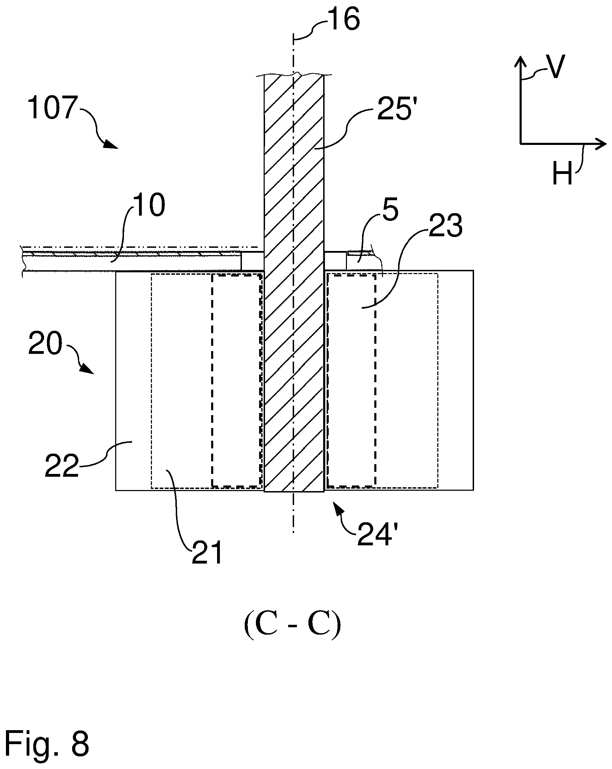

In Fig. 8 ist eine Antriebsanordnung 107 für den Spannrahmen 3 gemäß einem weiteren Ausführungsbeispiel gezeigt, wobei die Antriebsanordnung 107 in Fig. 1 anstelle der Antriebsanordnung 7 zum Einsatz kommen kann.

Die Antriebsanordnung 107 weist einen Torquemotor 20 als rotierende elektrische Maschine 20 auf. Es ist ein Spindeltrieb 24' mit einer Spindel 25' und einer in Fig. 8 nicht näher dargestellten Mutter 26' vorgesehen, welche analog Fig. 7 ausgebildet ist.

Die Spindel 25' ragt bei dem Ausführungsbeispiel der Fig. 8 im Wesentlichen vertikal von der Maschinenplatte 10 der Thermoformmaschine 1 nach oben und ist um eine im Wesentlichen vertikale Drehachse 16 drehbar, aber axial feststehend gelagert.

Mit der Spindel 25' ist im Bereich deren unteren Endes eine Hohlwelle 23 eines drehbaren Läufers 21 des Torquemotors 20 drehfest verbunden, wobei sich die Spindel 25' abschnittsweise axial durch ein hohles Inneres der Hohlwelle 23 erstreckt. Auch in Fig. 8 sind die Spindel 25', der Läufer 21 mit der Hohlwelle 23, und die Achse 16 koaxial zueinander angeordnet. Ein Ständer 22 der elektrischen Maschine 20 ist fest mit dem Maschinengehäuse 5 gekoppelt.

Wird die Spindel 25', wiederum insbesondere eine Kugelrollspindel, mittels der elektrischen Maschine 20 rotiert, so kann die in Fig. 8 nicht gezeigte, mit dem Spannrahmen 3 in axialer Richtung und in Umfangsrichtung, mithin verschiebe- und drehfest, verbundene Mutter 26', insbesondere eine Kugelumlaufmutter, an der Spindel 25' entlang verfahren. Durch Betrieb der Torquemotoren 20 zum Rotieren der Spindeln 25' im Bereich der vier Ecken des Spannrahmens 3 kann der Spannrahmen 3 in vertikaler Richtung V verfahren werden. Auch in Fig. 8 ist der Läufer 21 direkt und ohne Zwischenschaltung eines Getriebes mit der Spindel 25' gekoppelt.

Bei den Anordnungen 106 und 107 der Fig. 7 und 8 ist somit die elektrische Maschine 20 statisch in der Thermoformmaschine 1 eingebaut und die Spindel 25', die insbesondere als Kugelrollspindel ausgebildet ist, wird drehend bewegt. Auf der Spindel 25' läuft dann die Mutter 26', insbesondere als Kugelrollmutter ausgebildet, auf und ab, die zusammen mit weiteren Muttern 26' den Tisch 2 oder den Spannrahmen 3 trägt. Ein analoges Ausführungsbeispiel, bei dem beispielsweise zwei Muttern 26' den Oberstempel tragen und an drehbaren, axial unverschieblich eingebauten Spindeln 25' auf- und ablaufen, ist ebenfalls vorstellbar.

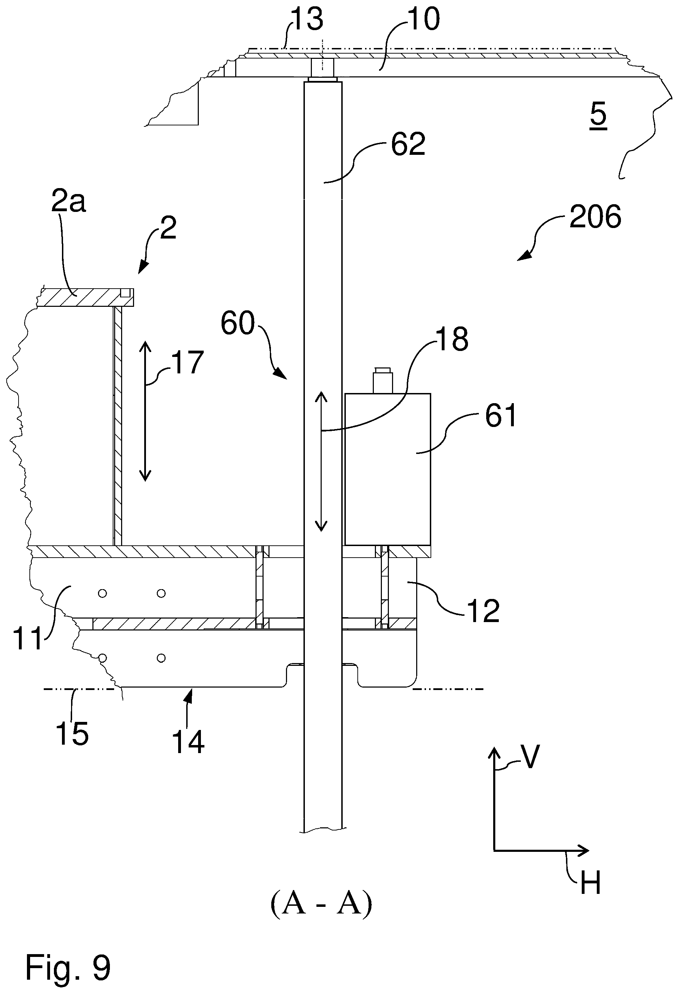

Eine Antriebsanordnung 206 für den Maschinentisch 2 der Thermoformmaschine 1 gemäß einem wiederum anderen Ausführungsbeispiel der Erfindung zeigt schematisch Fig. 9 im Schnitt A-A. Die Anordnung 206 kann anstelle der Anordnung 6 der Fig. 1 zum Einsatz kommen.

Bei der Antriebsanordnung 206 ist eine elektrische Maschine zum Antreiben des Tisches 2 für das translatorische Verfahren desselben vorgesehen, die als ein Linearmotor 60 ausgebildet ist. Ein translatorisch im Wesentlichen entlang der vertikalen Richtung V bewegbarer Läufer 61 des Linearmotors 60 ist mit der als Maschinentisch ausgebildeten Maschinenkomponente 2 direkt gekoppelt und hierbei mit der seitlichen Verlängerung 12 des tragenden Teils 11 des Maschinentisches 2 fest verbunden. Ein feststehender Ständer 62 des Linearmotors 60 erstreckt sich entlang der vertikalen Richtung V unterhalb der Maschinenplatte 10 innerhalb des Inneren des Maschinengehäuses 5, wobei der Ständer 62 am Maschinengehäuse 5 fixiert ist. Der Ständer 62 kann hierbei auch als Fahrweg des Linearmotors 60 bezeichnet werden. Fig. 9 zeigt zudem, dass der Läufer 61 zwischen der Einspannebene 13 für das Ausgangsmaterial 9 und der durch die Unterkante 14 des tragenden Teils 11 definierten Ebene 15 angeordnet ist, für jede für den Betrieb der Thermoformmaschine vorgesehene Verfahrposition des Tisches 2. Mittels Betrieb der Linearmotoren 60 an den vier Ecken des Maschinentisches 2 lässt sich dieser entlang der Vertikalen V translatorisch auf- und abbewegen, wie durch Bezugszeichen 17 angedeutet. Die Anordnung 206 kommt somit mit einer weiter verringerten Anzahl bewegter Teile aus, vertikal wird der Tisch 2 mittels der Linearmotoren 60 "schwebend" gehalten und bewegt.

Vorzugsweise ist bei dem Ausführungsbeispiel der Fig. 9 eine nicht dargestellte Linearführung für die seitliche Führung des Maschinentisches 2 bei der Vertikalbewegung 17 vorgesehen, die zum Beispiel als Gleitführung oder unter Verwendung von Wälzkörpern ausgebildet sein kann. Zudem ist bevorzugt bei dem Ausführungsbeispiel der Fig. 9 zur weiter verbesserten Sicherheit und Zuverlässigkeit eine Bremseinrichtung vorsehen, welche ein Herabfallen der als Maschinentisch ausgebildeten Maschinenkomponente 2 zum Beispiel bei einem Ausfall der Stromversorgung verhindert. Die Bremseinrichtung ist in Fig. 9 der besseren Übersicht halber nicht näher dargestellt.

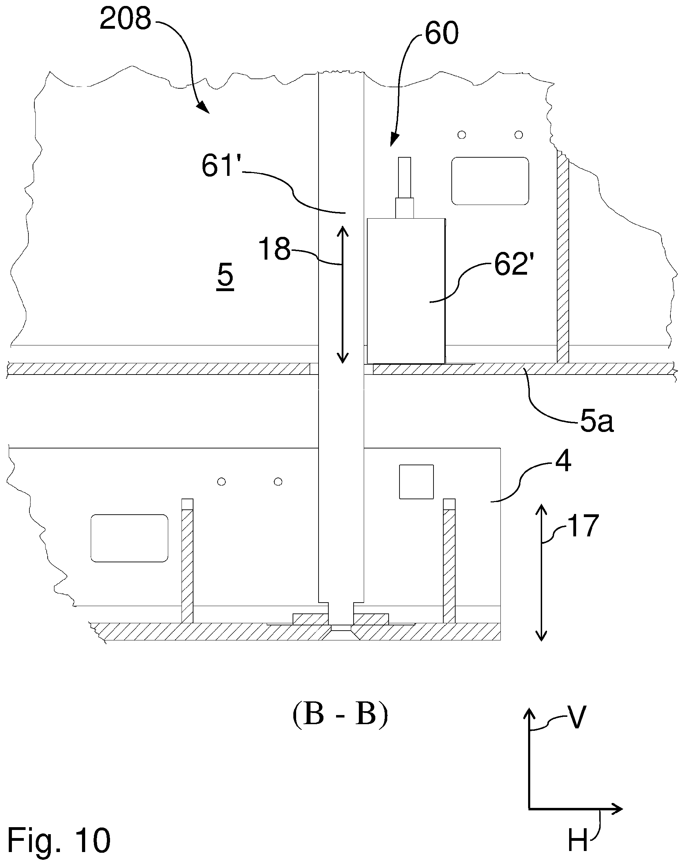

Fig. 10 zeigt schematisch eine Antriebsanordnung 208 für den Oberstempel 4, die mit einer als Linearmotor 60 ausgebildeten elektrischen Maschine 60 realisiert ist und anstelle der Anordnung 8 in Fig. 1 eingesetzt werden kann. Hierbei ist ein Ständer 62' des Linearmotors 60 an dem Maschinengehäuse 5 und hierbei an dem oberhalb der Maschinenplatte 10 und der Einspannebene 13 horizontal quer verlaufenden Teil 5a des Maschinengehäuses 5 angeordnet und mit dem Teil 5a fest gekoppelt. Der Ständer 62' des Linearmotors 60 in Fig. 10 kann insbesondere dem translatorisch bewegbaren Läufer 61 des Linearmotors 60 aus Fig. 9 entsprechen.

Ein Läufer 61' des Linearmotors 60 ist relativ zu dem Maschinengehäuse 5 in vertikaler Richtung V axial verschiebbar angeordnet und an einem in Fig. 10 unteren Ende des Läufers 61' fest mit dem Oberstempel 4 verbunden. Der translatorisch bewegbare Läufer 61' der Fig. 10 kann dem Stator 62 der Fig. 9 entsprechend ausgebildet sein.

Beim Betrieb der Linearmotoren 60 der beispielhaft zwei Antriebsanordnungen 208 für den Oberstempel 4 kann dieser schnell und präzise translatorisch in Verfahrrichtung 17 im Wesentlichen parallel zur Vertikalen V bewegt werden. Alternativ sind beispielsweise vier Antriebsanordnungen 208 für den Oberstempel 4 zur Implementierung dieser Bewegung denkbar.

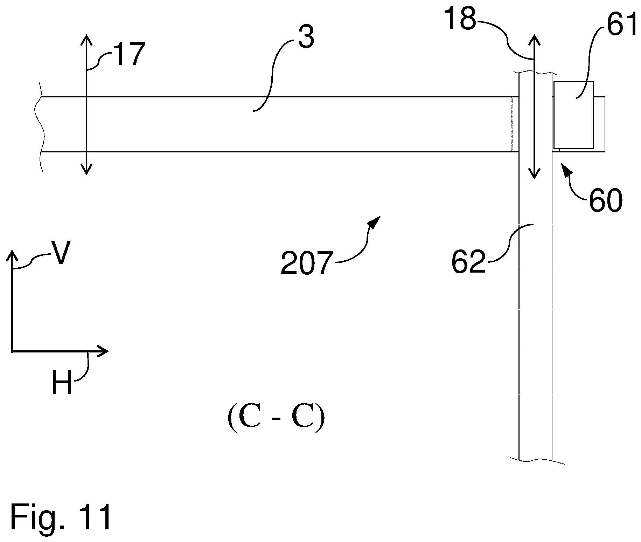

Ein Antriebsanordung 207 für den Spannrahmen 3 gemäß einem noch weiteren Ausführungsbeispiel zeigt Fig. 11 in schematischer Weise. Die Anordnung 207 kann in Fig. 1 anstelle der Anordnung 7 verwendet werden.

Hierbei ist analog Fig. 9 ein sich entlang der vertikalen Richtung V erstreckender Ständer 62 vorgesehen, der mit dem in Fig. 11 nicht dargestellten Maschinengehäuse 5 fest und unverschiebbar verbunden ist. Mit dem Spannrahmen 3 ist ein Läufer 61 des Linearmotors 60 fest verbunden.

Auch bei den Anordnungen 207 und 208 der Fig. 11 bzw. 10 ist jeweils eine Bremseinrichtung, in den Figuren nicht näher dargestellt, vorgesehen, um bei einem Stromausfall ein unkontrolliertes Herunterfallen des Spannrahmens 3 bzw. des Oberstempels 4 zu verhindern.

Fig. 4-8 illustrieren Ausführungsbeispiele, in denen ein Antriebskonzept für eine Thermoformmaschine 1 umgesetzt ist, das sich Elektromotoren mit sehr starkem Drehmoment, so genannte Torquemotoren, zunutze macht.

Die Torquemotoren 20, jeweils entweder mit der integrierten Kugelrollmutter 26, 26" oder der direkt angetriebenen Spindel 25', beispielsweise eingebaut im Bereich jeder von vier Ecken des Spannrahmens 3 oder des Tisches 2 oder zum Beispiel im Bereich zweier Seiten des Oberstempels 4, können somit die Komponenten 2, 3, 4 bewegen, ohne dass ein Zahnradgetriebe zur Wandlung von Drehzahl und Drehmoment benötigt wird. Die Leistung der Torquemotoren 20, das erzielbare Drehmoment, und die Steigung der Spindel 25, 25', 25" werden vorzugsweise derart gewählt, dass die gewünschten Verfahrgeschwindigkeiten sowie die von den Komponenten 2, 3, 4 aufzubringende Kräfte für die Formung des Materials 9 mit der gewünschten Zuverlässigkeit und ggf. Reserve erreichbar sind. Beispielsweise kann die Leistung des Torquemotors 20 erhöht und die Steigung der Spindel 25, 25', 25" herabgesetzt werden, um die gewünschten Geschwindigkeiten und Kräfte zu erzielen.

Fig. 9-11 zeigen Ausführungsbeispiele, bei denen in der Vertikalen V arbeitende Linearmotoren 60 vorgesehen sind. Eine im Wesentlichen vertikal verlaufende Bewegungsrichtung des Linearmotors 60 ist in Fig. 9-11 mit Bezugszeichen 18 bezeichnet.

Eine vertikale Linearführung ist hierbei zum Beispiel mit einem ersten wirksamen Teil als Stator 62, 62', das zu bewegende Bauteil - beispielsweise der Tisch 2, der Spannrahmen 3 oder der Oberstempel 4 - mit einem zweiten wirksamen Teil als Läufer 61, 61' des Linearmotors 60 versehen.

Bei den vorstehend beschriebenen Ausführungsbeispielen werden vorzugsweise für den Maschinentisch 2 vier Antriebsanordnungen 6, 106 oder 206, und für den Spannrahmen 3 vier Antriebsanordnungen 7, 107 oder 207 vorgesehen. Für den Oberstempel 4 können beispielsweise zwei Antriebsanordnungen 8 oder 208 vorgesehen sein. Ein Oberstempel 4 mit vier Antriebsanordnungen 8 oder 208, die jeweils im Bereich einer von vier Ecken des Oberstempels 4 angeordnet sind, ist ebenfalls denkbar.

Eine Synchronisierung der Verfahrbewegung 17 der mehreren einzelnen Antriebsanordnungen jeder Komponente 2, 3, 4 kann mittels der elektronischen Steuerung erreicht werden, ohne dass eine mechanische Synchronisierung benötigt wird.

### Liste der Bezugszeichen

- 1: Thermoformmaschine
- 2: Maschinentisch
- 2a: Tischplatte
- 3: Spannrahmen
- 4: Oberstempel
- 5: Maschinengehäuse
- 5a: quer verlaufendes Teil (Maschinengehäuse)
- 6: Antriebsanordnung (für Maschinentisch)
- 106: Antriebsanordnung (für Maschinentisch)
- 206: Antriebsanordnung (für Maschinentisch)
- 7: Antriebsanordnung (für Spannrahmen)
- 107: Antriebsanordnung (für Spannrahmen)
- 207: Antriebsanordnung (für Spannrahmen)
- 8: Antriebsanordnung (für Oberstempel)
- 208: Antriebsanordnung (für Oberstempel)
- 9: Ausgangsmaterial
- 10: Maschinenplatte (Maschinengehäuse)
- 11: tragender Teil (Maschinentisch)
- 12: Verlängerung (tragender Teil)
- 13: Einspannebene
- 14: Unterkante
- 15: Ebene
- 16: Drehachse (rotierende elektrische Maschine)
- 17: Verfahrrichtung
- 18: Bewegungsrichtung (Linearmotor)
- 20: rotierende elektrische Maschine
- 21: Läufer (rotierende elektrische Maschine)
- 22: Ständer (rotierende elektrische Maschine)
- 23: Hohlwelle
- 24: Spindeltrieb
- 24': Spindeltrieb
- 25: feststehende Spindel
- 25': drehbare Spindel
- 26: drehbare mitfahrende Mutter
- 26': im Umfangsrichtung feststehende, mitfahrende Mutter
- 24": Spindeltrieb
- 25": in Umfangsrichtung feststehende, verschiebbare Spindel
- 26": drehbare Mutter
- 60: Linearmotor
- 61: Läufer (Linearmotor)
- 61': Läufer (Linearmotor)
- 62: Ständer (Linearmotor)
- 62': Ständer (Linearmotor)
- H: horizontale Richtung
- V: vertikale Richtung

## Patentansprüche

1. Thermoformmaschine (1), aufweisend
mindestens eine translatorisch verfahrbare Maschinenkomponente (2), mittels der beim Thermoformen eines Ausgangsmaterials (9) für die Herstellung eines Formteils eine Kraft auf das Ausgangsmaterial (9) aufbringbar ist, und mindestens eine elektrische Maschine (20) zum Antreiben der Maschinenkomponente (2) für das translatorische Verfahren derselben;
wobei die elektrische Maschine (20) als eine rotierende elektrische Maschine ausgebildet ist und zur Erzeugung einer Bewegung für das translatorische Verfahren der Maschinenkomponente (2) ein drehbarer Läufer (21) der elektrischen Maschine (20) mit einem Element (26) eines Spindeltriebs (24) direkt gekoppelt ist;
wobei die translatorisch verfahrbare Maschinenkomponente (2) als ein verfahrbarer Maschinentisch (2) für ein Formwerkzeug ausgebildet ist; und
wobei die rotierende elektrische Maschine (20) an einer seitlichen, sich quer zur Verfahrrichtung (17) des Maschinentisches (2) erstreckenden Verlängerung (12) eines tragenden Teils (11) des Maschinentisches (2) zwischen einer Einspannebene (13) für das Ausgangsmaterial (9) und einer durch eine Unterkante (14) des tragenden Teils (11) des Maschinentisches (2) definierten Ebene (15) angeordnet ist.

2. Thermoformmaschine nach Anspruch 1, **dadurch gekennzeichnet, dass** die rotierende elektrische Maschine (20) an der translatorisch verfahrbaren Maschinenkomponente (2) derart angeordnet ist, dass die elektrische Maschine (20) beim Verfahren der Maschinenkomponente mit dieser in Verfahrrichtung (17) mitbewegt wird.

3. Thermoformmaschine (1), aufweisend
mindestens eine translatorisch verfahrbare Maschinenkomponente (2), mittels der beim Thermoformen eines Ausgangsmaterials (9) für die Herstellung eines Formteils eine Kraft auf das Ausgangsmaterial (9) aufbringbar ist, und mindestens eine elektrische Maschine (20) zum Antreiben der Maschinenkomponente (2) für das translatorische Verfahren derselben;
wobei die elektrische Maschine (20) als eine rotierende elektrische Maschine ausgebildet ist und zur Erzeugung einer Bewegung für das translatorische Verfahren der Maschinenkomponente (2) ein drehbarer Läufer (21) der elektrischen Maschine (20) mit einem Element (25') eines Spindeltriebs (24') direkt gekoppelt ist;
wobei die translatorisch verfahrbare Maschinenkomponente (2) als ein verfahrbarer Maschinentisch (2) für ein Formwerkzeug ausgebildet ist; und
wobei die rotierende elektrische Maschine (20) mit einem Maschinengehäuse (5) der Thermoformmaschine (1) fest gekoppelt und hierbei zwischen einer Einspannebene (13) für das Ausgangsmaterial (9) und einer durch eine Unterkante (14) eines tragenden Teils (11) des Maschinentisches (2) definierten Ebene (15) angeordnet ist.

4. Thermoformmaschine nach Anspruch 3, **dadurch gekennzeichnet, dass** ein Ständer (22) der rotierenden elektrischen Maschine (20) fest mit einem Maschinengehäuse (5) gekoppelt ist.

5. Thermoformmaschine nach einem der vorstehenden Ansprüche, **dadurch gekennzeichnet, dass** die rotierende elektrische Maschine (20) als ein Drehstrom-Servomotor, insbesondere ein Torquemotor, ausgebildet ist.

6. Thermoformmaschine nach einem der vorstehenden Ansprüche, **dadurch gekennzeichnet, dass** mittels der rotierenden elektrischen Maschine (20) als angetriebenes Element eine Spindel (25') oder eine Mutter (26) des Spindeltriebes (24; 24') zur Erzeugung der Bewegung für das translatorische Verfahren der Maschinenkomponente (2) direkt, insbesondere ohne Zwischenschaltung eines Getriebes zwischen dem Läufer (21) der rotierenden elektrischen Maschine (20) und dem angetriebenen Element (26; 25'), antreibbar ist und insbesondere dass eine Drehzahl des Läufers (21) der rotierenden elektrischen Maschine (20) im Betrieb derselben einer Drehzahl des angetriebenen Elements (26; 25') des Spindeltriebes (24; 24') entspricht.

7. Thermoformmaschine nach Anspruch 6,
**dadurch gekennzeichnet, dass** die rotierende elektrische Maschine (20) eine Hohlwelle (23) aufweist, wobei das angetriebene Element (26; 25') mit der Hohlwelle (23) drehfest verbunden ist und insbesondere wobei sich die Spindel (25; 25') des Spindeltriebes (24; 24') axial durch einen Innenbereich der Hohlwelle (23) hindurch erstreckt.

8. Thermoformmaschine nach einem der vorstehenden Ansprüche, **dadurch gekennzeichnet, dass** die translatorisch verfahrbare Maschinenkomponente (2) im Betrieb der Thermoformmaschine (1) entlang einer im Wesentlichen vertikalen Richtung (V) verfahrbar ist.

9. Thermoformmaschine nach einem der vorstehenden Ansprüche, **dadurch gekennzeichnet, dass** eine Drehachse (16) der rotierenden elektrischen Maschine (20) im Wesentlichen vertikal angeordnet ist.

10. Thermoformmaschine (1), aufweisend
mindestens eine translatorisch verfahrbare Maschinenkomponente (2), mittels der beim Thermoformen eines Ausgangsmaterials (9) für die Herstellung eines Formteils eine Kraft auf das Ausgangsmaterial (9) aufbringbar ist, und mindestens eine elektrische Maschine (60) zum Antreiben der Maschinenkomponente (2) für das translatorische Verfahren derselben;
wobei die elektrische Maschine (60) als ein Linearmotor ausgebildet ist und ein translatorisch bewegbarer Läufer (61) des Linearmotors (60) mit der Maschinenkomponente (2) direkt gekoppelt ist;
wobei die translatorisch verfahrbare Maschinenkomponente (2) als ein verfahrbarer Maschinentisch (2) für ein Formwerkzeug ausgebildet ist; und
wobei der Läufer (61) des Linearmotors (60) fest mit einem tragenden Teil (11) des Maschinentisches (2) verbunden und zwischen einer Einspannebene (13) für das Ausgangsmaterial (9) und einer durch eine Unterkante (14) des tragenden Teils (11) des Maschinentisches (2) definierten Ebene (15) angeordnet ist.

11. Thermoformmaschine nach Anspruch 10,
**dadurch gekennzeichnet, dass** die translatorisch verfahrbare Maschinenkomponente (2) im Betrieb der Thermoformmaschine (1) entlang einer im Wesentlichen vertikalen Richtung (V) verfahrbar ist.

12. Thermoformmaschine nach Anspruch 10 oder 11,
**dadurch gekennzeichnet, dass** der Linearmotor (60) eine im Wesentlichen vertikale Bewegungsrichtung (18) aufweist.

13. Thermoformmaschine nach einem der vorstehenden Ansprüche, **dadurch gekennzeichnet, dass** die Thermoformmaschine (1) als eine Closed-Chamber-Thermoformmaschine ausgebildet ist und/oder dass die Thermoformmaschine (1) als eine Einstation-Thermoformmaschine ausgebildet ist.

## Claims

1. Thermoforming machine (1) comprising
at least one translationally movable machine component (2), by means of which a force can be applied to a starting material (9) during the thermoforming of the starting material (9) for the production of a moulded part, and
at least one electric machine (20) for driving the machine component (2) for the translational movement thereof;
wherein the electric machine (20) is designed as a rotating electric machine and a rotatable rotor (21) of the electric machine (20) is directly coupled to an element (26) of a spindle drive (24) in order to generate a movement for the translational movement of the machine component (2);
wherein the translationally movable machine component (2) is designed as a movable machine table (2) for a moulding tool; and
wherein the rotating electric machine (20) is arranged on a lateral extension (12), which extends transversely to the direction of movement (17) of the machine table (2), of a supporting part (11) of the machine table (2) between a clamping plane (13) for the starting material (9) and a plane (15) that is defined by a lower edge (14) of the supporting part (11) of the machine table (2).

2. Thermoforming machine according to claim 1,
**characterised in that** the rotating electric machine (20) is arranged on the translationally movable machine component (2) in such a manner that the electric machine (20) is moved along with the machine component in the direction of movement (17) during the movement thereof.

3. Thermoforming machine (1) comprising
at least one translationally movable machine component (2), by means of which a force can be applied to a starting material (9) during the thermoforming of the starting material (9) for the production of a moulded part, and
at least one electric machine (20) for driving the machine component (2) for the translational movement thereof;
wherein the electric machine (20) is designed as a rotating electric machine and a rotatable rotor (21) of the electric machine (20) is directly coupled to an element (25') of a spindle drive (24') in order to generate a movement for the translational movement of the machine component (2);
wherein the translationally movable machine component (2) is designed as a movable machine table (2) for a moulding tool; and
wherein the rotating electric machine (20) is fixedly coupled to a machine housing (5) of the thermoforming machine (1) and in this case is arranged between a clamping plane (13) for the starting material (9) and a plane (15) that is defined by a lower edge (14) of the supporting part (11) of a machine table (2).

4. Thermoforming machine according to claim 3,
**characterised in that** a stator (22) of the rotating electric machine (20) is fixedly coupled to a machine housing (5).

5. Thermoforming machine according to one of the preceding claims,
**characterised in that** the rotating electric machine (20) is designed as a three-phase servomotor, in particular a torque motor.

6. Thermoforming machine according to one of the preceding claims,
**characterised in that** a spindle (25') or a nut (26) of the spindle drive (24; 24') for generating the movement for the translational movement of the machine component (2) can be driven directly, in particular without the interposition of a gear between the rotor (21) of the rotating electric machine (20) and the driven element (26; 25'), and in particular that a speed of the rotor (21) of the rotating electric machine (20) during operation thereof corresponds to a speed of the driven element (26; 25') of the spindle drive (24; 24').

7. Thermoforming machine according to claim 6,
**characterised in that** the rotating electric machine (20) comprises a hollow shaft (23), wherein the driven element (26; 25') is connected to the hollow shaft (23) in a rotationally fixed manner and in particular wherein the spindle (25; 25') of the spindle drive (24; 24') extends axially through an inner region of the hollow shaft (23).

8. Thermoforming machine according to one of the preceding claims,
**characterised in that** the translationally movable machine component (2) is movable along an essentially vertical direction (V) during operation of the thermoforming machine (1).

9. Thermoforming machine according to one of the preceding claims,
**characterised in that** an axis of rotation (16) of the rotating electric machine (20) is arranged essentially vertically.

10. Thermoforming machine (1) comprising
at least one translationally movable machine component (2), by means of which a force can be applied to a starting material (9) during the thermoforming of the starting material (9) for the production of a moulded part, and at least one electric machine (60) for driving the machine component (2) for the translational movement thereof;
wherein the electric machine (60) is designed as a linear motor and a translationally movable rotor (61) of the linear motor (60) is directly coupled to the machine component (2);
wherein the translationally movable machine component (2) is designed as a movable machine table (2) for a moulding tool; and
wherein the rotor (61) of the linear motor (60) is fixedly connected to a supporting part (11) of the machine table (2) and is arranged between a clamping plane (13) for the starting material (9) and a plane (15) that is defined by a lower edge (14) of the supporting part (11) of the machine table (2).

11. Thermoforming machine according to claim 10, **characterised in that** the translationally movable machine component (2) is movable along an essentially vertical direction (V) during operation of the thermoforming machine (1).

12. Thermoforming machine according to claim 10 or 11, **characterised in that** the linear motor (60) comprises an essentially vertical direction of movement (18).

13. Thermoforming machine according to one of the preceding claims, **characterised in that** the thermoforming machine (1) is designed as a closed-chamber thermoforming machine and/or **in that** the thermoforming machine (1) is designed as a single-station thermoforming machine.

## Revendications

1. Machine de thermoformage (1) comportant
au moins un composant de machine (2) déplaçable en translation, au moyen duquel une force peut être appliquée à un matériau de départ (9) lors du thermoformage dudit matériau de départ (9) pour la fabrication d'une pièce formée, et
au moins une machine électrique (20) pour entraîner le composant de machine (2) pour le déplacement en translation de celui-ci ;
la machine électrique (20) étant conçue comme une machine électrique rotative et, pour générer un mouvement pour le déplacement en translation du composant de machine (2), un rotor rotatif (21) de la machine électrique (20) étant directement couplé à un élément (26) d'un entraînement à broche (24) ;
dans laquelle le composant de machine (2) déplaçable en translation est conçu comme une table de machine déplaçable (2) pour un outil de formage ; et
dans laquelle la machine électrique rotative (20) est disposée sur une extension latérale (12) d'une partie porteuse (11) de la table de machine (2) qui s'étend transversalement à la direction de déplacement (17) de la table de machine (2) entre un plan de serrage (13) pour le matériau de départ (9) et un plan (15) défini par un bord inférieur (14) de la partie porteuse (11) de la table de machine (2).

2. Machine de thermoformage selon la revendication 1, **caractérisée en ce que** la machine électrique rotative (20) est disposée sur le composant de machine (2) déplaçable en translation de telle sorte que la machine électrique (20) est déplacée avec le composant de machine dans la direction de déplacement (17) lorsque celui-ci se déplace.

3. Machine de thermoformage (1) comportant
au moins un composant de machine (2) déplaçable en translation, au moyen duquel une force peut être appliquée à un matériau de départ (9) lors du thermoformage dudit matériau de départ (9) pour la fabrication d'une pièce formée, et
au moins une machine électrique (20) pour entraîner le composant de machine (2) pour le déplacement en translation de celui-ci ;
la machine électrique (20) étant conçue comme une machine électrique rotative et, pour générer un mouvement pour le déplacement en translation du composant de machine (2), un rotor rotatif (21) de la machine électrique (20) étant directement couplé à un élément (25') d'un entraînement à broche (24') ;
dans laquelle le composant de machine (2) déplaçable en translation est conçu comme une table de machine déplaçable (2) pour un outil de formage ; et
dans laquelle la machine électrique rotative (20) est couplée de manière solidaire à un carter de machine (5) de la machine de thermoformage (1) et disposée dans ce cas entre un plan de serrage (13) pour le matériau de départ (9) et un plan (15) défini par un bord inférieur (14) d'une partie porteuse (11) de la table de machine (2).

4. Machine de thermoformage selon la revendication 3, **caractérisée en ce qu'**un stator (22) de la machine électrique rotative (20) est couplé de manière solidaire à un carter de machine (5).

5. Machine de thermoformage selon l'une des revendications précédentes,
**caractérisée en ce que** la machine électrique rotative (20) est conçue comme un servomoteur triphasé, en particulier un moteur couple.

6. Machine de thermoformage selon l'une des revendications précédentes,
**caractérisée en ce qu'**en tant qu'élément entraîné, une broche (25') ou un écrou (26) de l'entraînement à broche (24 ; 24') peut être entraîné(e) au moyen de la machine électrique rotative (20) directement, en particulier sans interposition d'un engrenage entre le rotor (21) de la machine électrique rotative (20) et l'élément entraîné (26 ; 25') pour générer le mouvement pour le déplacement en translation du composant de machine (2), et en particulier **en ce qu'**une vitesse de rotation du rotor (21) de la machine électrique rotative (20) correspond, pendant le fonctionnement de celle-ci, à une vitesse de rotation de l'élément entraîné (26 ; 25') de l'entraînement à broche (24 ; 24').

7. Machine de thermoformage selon la revendication 6, **caractérisée en ce que** la machine électrique rotative (20) comporte un arbre creux (23), l'élément entraîné (26 ; 25') étant relié à l'arbre creux (23) de manière solidaire en rotation et, en particulier, la broche (25 ; 25') de l'entraînement à broche (24 ; 24') s'étendant axialement à travers un espace intérieur de l'arbre creux (23).

8. Machine de thermoformage selon l'une des revendications précédentes,
**caractérisée en ce que**, pendant le fonctionnement de la machine de thermoformage (1), le composant de machine (2) déplaçable en translation peut être déplacé suivant une direction (V) sensiblement verticale.

9. Machine de thermoformage selon l'une des revendications précédentes,
**caractérisée en ce qu'**un axe de rotation (16) de la machine électrique rotative (20) est agencé sensiblement verticalement.

10. Machine de thermoformage (1) comportant
au moins un composant de machine (2) déplaçable en translation, au moyen duquel une force peut être appliquée à un matériau de départ (9) lors du thermoformage dudit matériau de départ (9) pour la fabrication d'une pièce formée, et
au moins une machine électrique (60) pour entraîner le composant de machine (2) pour son déplacement en translation ;
dans laquelle la machine électrique (60) est conçue comme un moteur linéaire et un rotor (61) du moteur linéaire (60), mobile en translation, étant directement couplé au composant de machine (2) ;
dans laquelle le composant de machine (2) déplaçable en translation est conçu comme une table de machine déplaçable (2) pour un outil de formage ; et
dans laquelle le rotor (61) du moteur linéaire (60) est relié de manière solidaire à une partie porteuse (11) de la table de machine (2) et disposé entre un plan de serrage (13) pour le matériau de départ (9) et un plan (15) défini par un bord inférieur (14) de la partie porteuse (11) de la table de machine (2).

11. Machine de thermoformage selon la revendication 10, **caractérisée en ce que**, pendant le fonctionnement de la machine de thermoformage (1), le composant de machine (2) déplaçable en translation peut être déplacé suivant une direction (V) sensiblement verticale.

12. Machine de thermoformage selon la revendication 10 ou 11, **caractérisée en ce que** le moteur linéaire (60) présente une direction de mouvement (18) sensiblement verticale.

13. Machine de thermoformage selon l'une des revendications précédentes,
**caractérisée en ce que** la machine de thermoformage (1) est conçue comme une machine de thermoformage à chambre fermée et/ou **en ce que** la machine de thermoformage (1) est conçue comme une machine de thermoformage à station unique.
